# EUROPEAN PATENT APPLICATION

(11) **EP 4 796 288 A1**
(43) Date of publication of application: **26.08.2026**
(21) Application number: 24879747.4
(22) Date of filing: 16.10.2024
(51) Int. Cl.: B29C 49/18, B29C 33/42, B29C 49/06, B29C 49/12, B29C 49/48

(54) **BLOW MOLDING APPARATUS, BLOW MOLDING METHOD, AND MOLD UNIT**

(30) Priority: 16.10.2023 JP 2023178365
(71) Applicant: Nissei ASB Machine Co., Ltd., Komoro-shi, Nagano 384-8585 (JP)
(72) Inventor: UEHARA, Yukihiro, Komoro-shi, Nagano 384-8585 (JP)
(74) Representative: Novagraaf International SA
(86) International application number: PCT/JP2024/036884
(87) International publication number: WO 2025/084326

(57) **Abstract**

To provide a blow molding apparatus including an injection molding section (110) configured to injection-mold a preform (10) and a blow molding section (130). The blow molding section (130) includes a first blow molding section (131) configured to blow-mold the preform (10) to manufacture an intermediate product (20), and a second blow molding section (132) configured to blow-mold the intermediate product (20) to manufacture a resin container (1). The second blow molding section (132) is configured to be capable of molding gripping recessed portions (5) in a body portion (3) of the resin container (1). The gripping recessed portions (5) each include a recessed portion formed sufficiently deeply to be close to each other inside the body portion (3) of the resin container (1).

## Description

### TECHNICAL FIELD

The present disclosure relates to a blow molding apparatus, a blow molding method, and a mold unit.

### BACKGROUND ART

PTL 1 discloses a resin container including a body portion of the resin container formed with a recessed portion.

### CITATION LIST

### PATENT LITERATURE

PTL 1: JP 07-329947 A

### SUMMARY OF INVENTION

### TECHNICAL PROBLEM

In order to easily hold a resin container, there is a demand for deepening a recessed portion formed in a container.

An object of the present disclosure is to provide a blow molding apparatus, a blow molding method, and a mold unit, by which it is possible to mold a sufficiently deep recessed portion in a body portion of a container.

### SOLUTION TO PROBLEM

A blow molding apparatus according to an aspect of the present disclosure is a blow molding apparatus including at least two blow molding sections, in which
the blow molding section includes
a first blow molding section configured to blow-mold the preform to manufacture an intermediate product, and
a second blow molding section configured to blow-mold the intermediate product to manufacture a container,
the second blow molding section is configured to be capable of molding a gripping recessed portion in a body portion of the container, and
recessed portions of the gripping recessed portions are formed sufficiently deeply to be close to each other inside the body portion of the container.

A blow molding method according to an aspect of the present disclosure is a blow molding method including at least two blow molding steps, in which the blow molding step includes
a first blow molding step of blow-molding the preform to manufacture an intermediate product, and
a second blow molding step of blow-molding the intermediate product to manufacture a container,
the second blow molding step includes molding a gripping recessed portion in a body portion of the container, and recessed portions of the gripping recessed portions are formed sufficiently deeply to be close to each other inside the body portion of the container.

A mold unit according to an aspect of the present invention is a mold unit including at least two blow molding sections and being used in a blow molding apparatus, in which
the mold unit includes
a first mold for a first blow molding section configured to blow-mold the preform to manufacture an intermediate product, and
a second mold for a second blow molding section configured to blow-mold the intermediate product to manufacture a container,
the second mold is configured to be capable of molding a gripping recessed portion in a body portion of the container, and recessed portions of the gripping recessed portions are formed sufficiently deeply to be close to each other inside the body portion of the container.

### ADVANTAGEOUS EFFECTS OF INVENTION

According to the present disclosure, it is possible to provide a blow molding apparatus, a blow molding method, and a mold unit, by which it is possible to mold a sufficiently deep recessed portion in a body portion of a container.

### BRIEF DESCRIPTION OF DRAWINGS

FIG. 1 is a front view of a resin container 1 according to the present embodiment.
FIG. 2 is a cross-sectional view taken along a line II-II in FIG. 1.
FIG. 3 is a diagram illustrating a preform.
FIG. 4 is a side view of an intermediate product.
FIG. 5 illustrates a manufacturing apparatus of a resin container.
FIG. 6 illustrates a manufacturing method for a resin container.
FIG. 7 illustrates a first blow molding section.
FIG. 8 illustrates a second blow molding section.
FIG. 9 illustrates a resin container according to a modification.
FIG. 10 illustrates a second blow molding section for manufacturing the resin container according to the modification.

### DESCRIPTION OF EMBODIMENTS

Hereinafter, an embodiment of the present disclosure will be described with reference to the drawings. Dimensions of the members illustrated in the drawings may be different from actual dimensions of the members for convenience of description.

### Resin Container

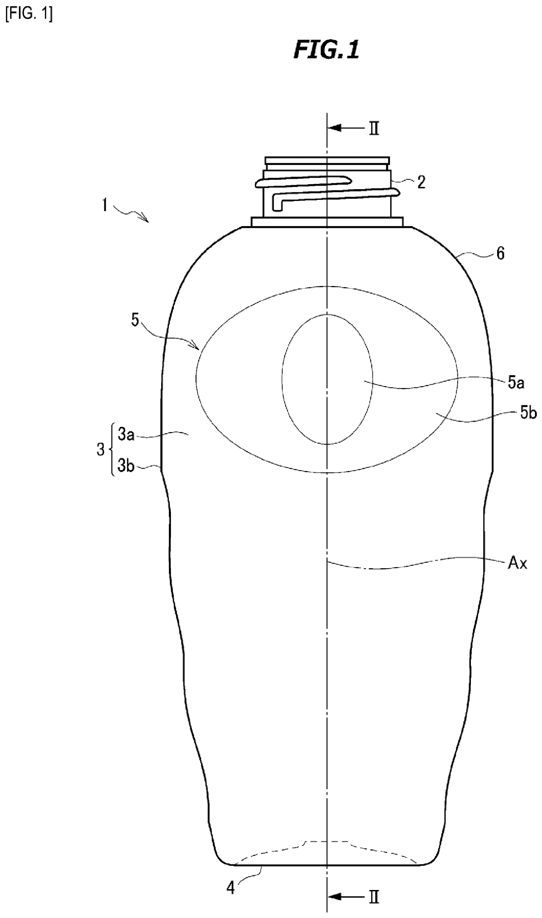

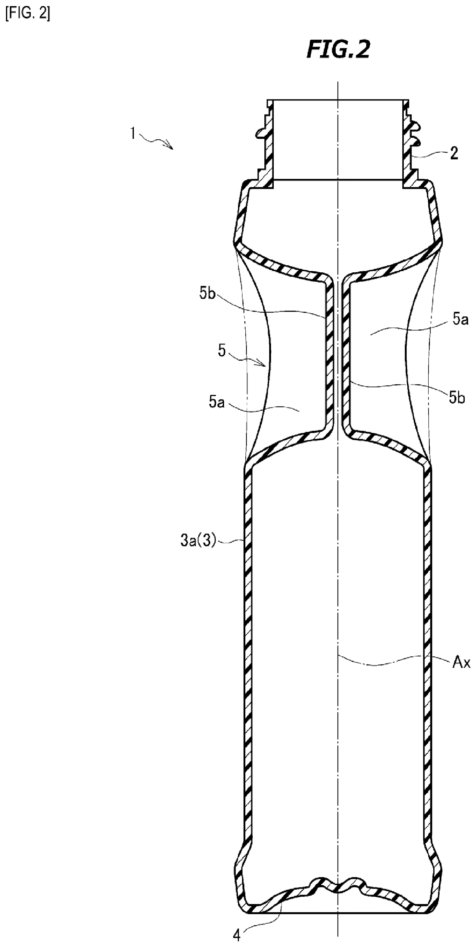

FIG. 1 is a front view of a resin container 1 according to the present embodiment. FIG. 2 is a cross-sectional view taken along a line II-II in FIG. 1. In the present embodiment, other examples of resins included in the resin container 1 include glycol-modified polycyclohexylenedimethylene terephthalate (PCTG), polycyclohexanedimethylene terephthalate/isophthalate copolymer resin (PCTA), polyethylene terephthalate (PET), polyethylene naphthalate (PEN), polycyclohexanedimethylene terephthalate (PCT), polypropylene (PP), polyethylene (PE), low-density polyethylene (LDPE), linear low-density polyethylene (LLDPE), polycarbonate (PC), polyethersulfone (PES), polyphenylsulfone (PPSU), polystyrene (PS), cyclic olefin polymer (COP/COC), polymethyl methacrylate: acrylic (PMMA), polylactic acid (PLA), and Tritan ((registered trademark) a polyester copolymer using cyclobutanediol as a monomer).

As illustrated in FIG. 1, the resin container 1 includes a neck portion 2, a shoulder portion 6, a body portion 3, a bottom portion 4, and a gripping recessed portion 5.

The neck portion 2 forms an inlet-outlet portion for a liquid in the resin container 1. A screw portion for enabling an unillustrated lid portion to be mounted may be formed on an outer surface of the neck portion 2.
The shoulder portion 6 is a portion connecting the neck portion 2 and the body portion 3, extends from a lower end of the neck portion 2, and gradually increases in diameter in an outer diameter direction toward a body portion 3 side or a lower side.

The body portion 3 is a portion connected to the neck portion 2. A cross-section of the body portion 3 is approximately elliptical or approximately flattened in shape, and includes a front surface portion (a surface where the gripping recessed portion is formed, a first surface portion with wide width) 3a having a long diameter side (long axis side) formed with the gripping recessed portion 5 (described later), and a lateral surface portion (a surface where the gripping recessed portion is not formed, a second surface portion with narrow width) 3b having a short diameter side (short axis side) not formed with the gripping recessed portion 5 (described later). The body portion 3 extends circumferentially around a central axis Ax of the resin container 1, and forms an outer peripheral surface (outer shape) of the body portion in the resin container 1.

The bottom portion 4 is a portion connected to the body portion 3. The bottom portion 4 is configured to close the lower end of the body portion 3. The body portion 3 and the bottom portion 4 define a liquid storage space in the resin container 1.

The gripping recessed portion 5 is a recessed portion formed in the body portion 3. In the present embodiment, the resin container 1 is provided with two gripping recessed portions 5 formed to be recessed toward the central axis Ax. In the present embodiment, each of the gripping recessed portions 5 includes a flat portion 5a extending along the central axis Ax, and an edge portion of the recessed portion 5a connecting the flat portion 5b and the body portion 3. As illustrated in FIG. 2, in the gripping recessed portion 5, the flat portion 5a is a portion closest to the other gripping recessed portion 5.

As illustrated in FIG. 1, in the resin container 1, when viewed transparently from the outer peripheral surface formed thereon with the gripping recessed portion 5, the resin container 1 is formed such that at least a part of the gripping recessed portion 5 overlaps the central axis Ax of the resin container 1.

The resin container 1 is manufactured by first manufacturing a preform 10, then manufacturing an intermediate product 20 from the preform 10, and finally blow-molding the intermediate product 20.

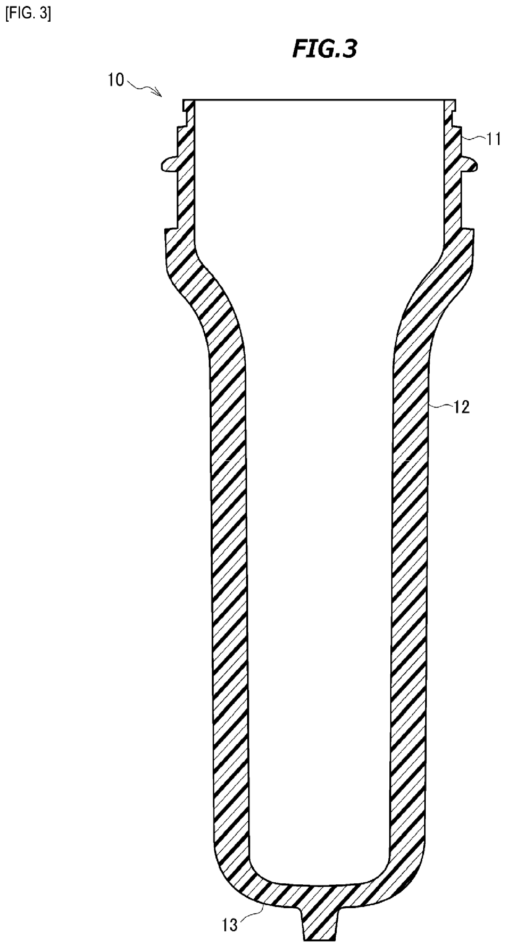

FIG. 3 illustrates the preform 10. As illustrated in FIG. 3, in the preform 10, the preform 10 includes a preform neck portion 11, a preform body portion 12, and a preform bottom portion 13, through injection molding. The preform neck portion 11 forms an opening of the preform 10. The preform neck portion 11 has a shape equivalent to that of the neck portion 2 of the resin container 1.

The preform body portion 12 extends circumferentially around the central axis of the preform 10 to form the outer peripheral surface (outer shape) of the body portion of the preform 10. The preform bottom portion 13 is connected to the preform body portion 12 and is configured to close a lower end of the preform body portion 12.

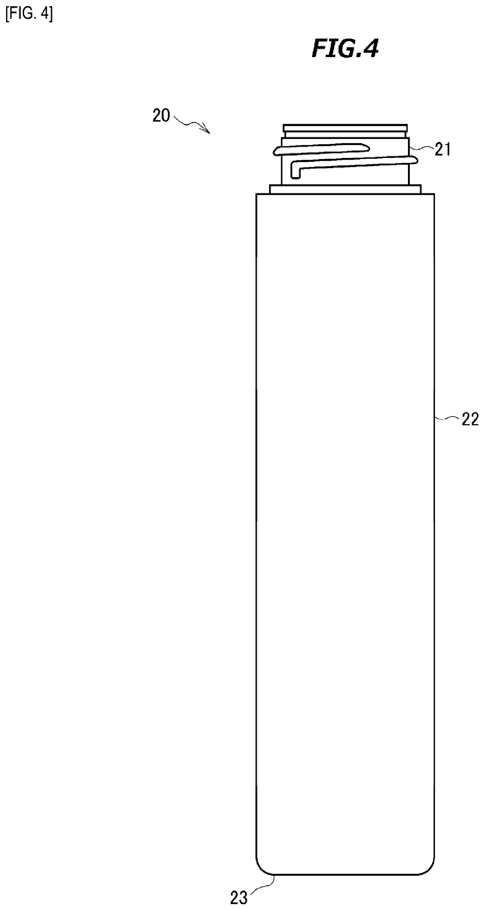

FIG. 4 is a side view of the intermediate product 20. The intermediate product 20 is obtained by stretching and blow-molding the preform 10. The intermediate product 20 includes an intermediate product neck portion 21, an intermediate product body portion 22, and an intermediate product bottom portion 23. The intermediate product neck portion 21 forms an opening of the intermediate product 20. Note that the shape of the intermediate product 20 as viewed from the front is substantially the same as the shape of the resin container 1 in FIG. 1 in which no gripping recessed portion 5 is provided.

The intermediate product body portion 22 extends circumferentially around the central axis of the intermediate product 20 to form the outer peripheral surface (outer shape) of the body portion of the intermediate product 20. The intermediate product bottom portion 23 is connected to the intermediate product body portion 22 and is configured to close a lower end of the intermediate product body portion 22.

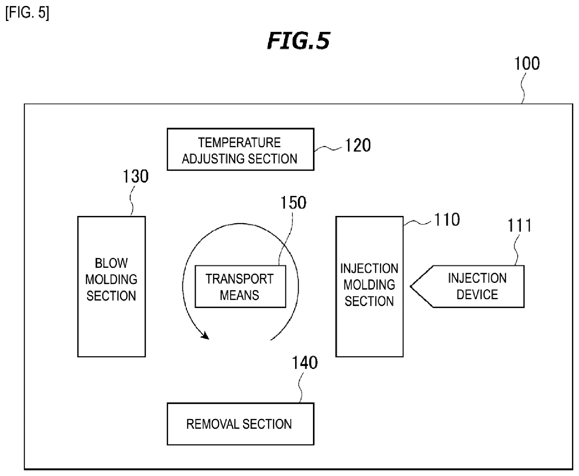

FIG. 5 illustrates a manufacturing apparatus 100 of the resin container 1. The manufacturing apparatus 100 is an example of a blow molding device. As illustrated in FIG. 5, the manufacturing apparatus 100 includes an injection molding section 110, a temperature adjusting section 120, a blow molding section 130, and a removal section 140.

The injection molding section 110 includes an injection cavity mold and an injection core mold (not illustrated). The injection cavity mold and the injection core mold constitute part of an injection cavity (molding space). The molten resin is injected from an injection device 111 into the injection cavity to manufacture the preform 10 for a resin container.

The temperature adjusting section 120 adjusts the preform 10 manufactured by the injection molding section 110 to a temperature suitable for blow molding.

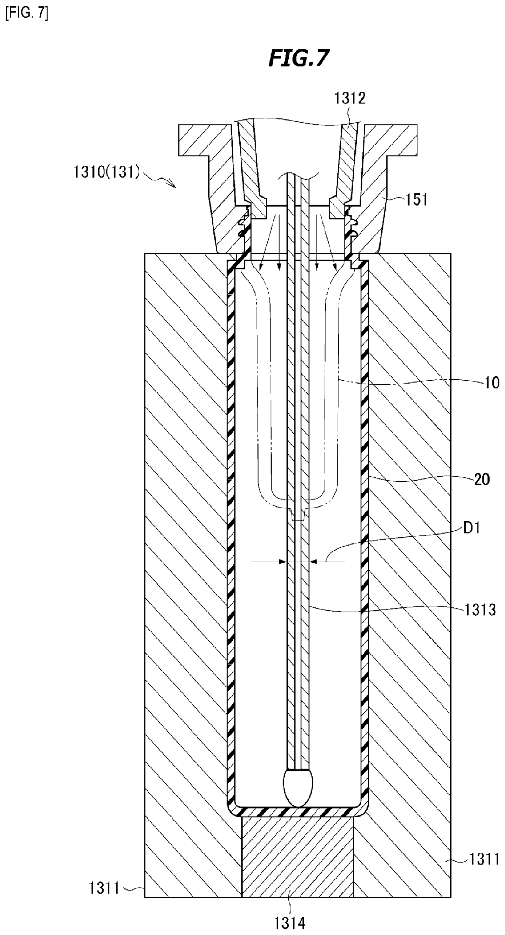

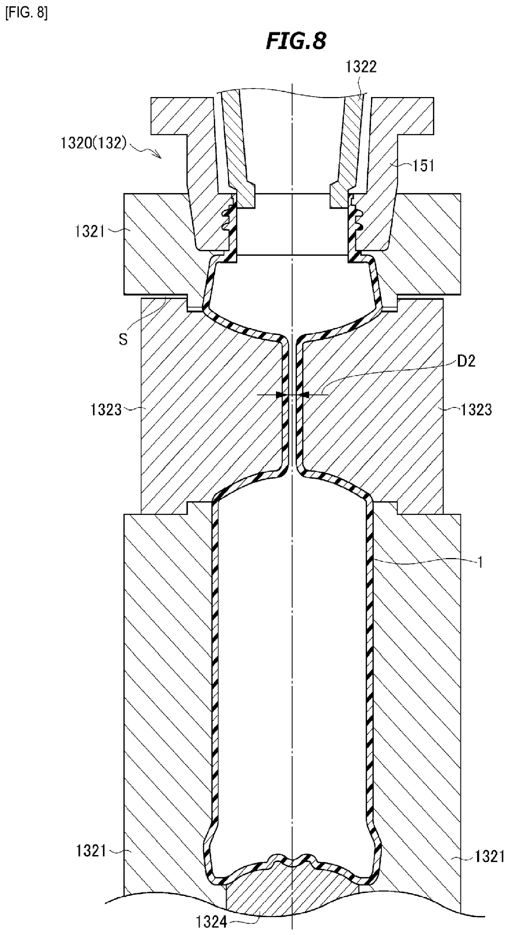

The blow molding section 130 is configured to blow-mold the preform 10 to finally manufacture the resin container. The blow molding section 130 includes a first blow molding section 131 (see FIG. 7) and a second blow molding section 132 (see FIG. 8). The first blow molding section 131 blow-molds the intermediate product 20 from the preform 10. The second blow molding section 132 blow-molds the resin container 1 from the intermediate product 20. The second blow molding section 132 is configured to be capable of forming the gripping recessed portion 5 in the body portion 3 of the resin container 1.

The removal section 140 is configured to remove the resin container manufactured by the blow molding section 130.

The injection molding section 110, the temperature adjusting section 120, the blow molding section 130, and the removal section 140 are provided at positions each defined by rotation by a predetermined angle about a transport means 150. In the present embodiment, the predetermined angle is 90 degrees. The transport means 150 is configured by a rotating plate or the like, and a neck mold 151 is attached to the rotating plate (see FIG. 7). The neck mold 151 is configured to grip the preform neck portion 11, the intermediate product neck portion 21, and the neck portion 2 of the resin container 1.

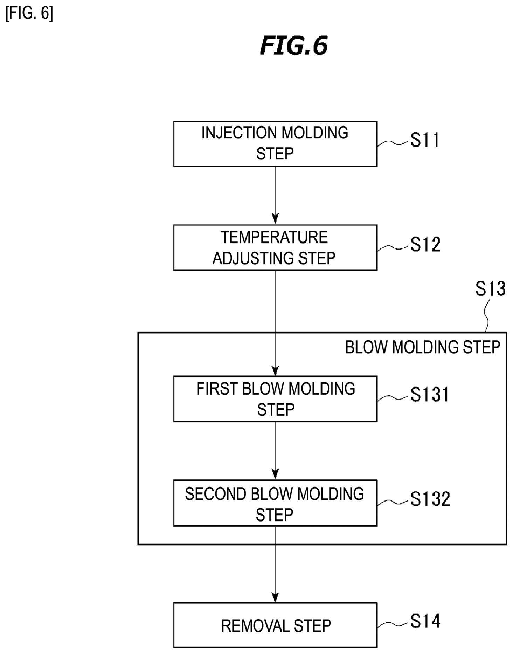

FIG. 6 illustrates a manufacturing method for the resin container 1. As illustrated in FIG. 6, the manufacturing method for the resin container 1 includes an injection molding step S11, a temperature adjusting step S12, a blow molding step S13, and a removal step S14.

The injection molding step S11 includes manufacturing the preform 10 by injection molding. In the injection molding step S11, an injection cavity (injection mold space) is formed by the neck mold 151, an injection cavity mold, and an injection core mold (not illustrated). The injection device 111 injects molten resin into the injection cavity. The injected molten resin is suitably cooled in the injection cavity, thereby forming the preform 10. When the manufactured preform 10 is released from the injection cavity mold and the injection core mold, the preform 10, which is held by the neck mold 151, is transported by the transport means 150 and transported to the temperature adjusting section 120.

The temperature adjusting step S12 includes adjusting the temperature of the preform 10 transported to the temperature adjusting section 120 to a temperature suitable for blow molding. The preform 10 adjusted to the temperature suitable for blow molding, which is held by the neck mold 151, is transported to the blow molding section 130 by the transport means 150.

The blow molding step S13 is a step of performing blow molding to manufacture the resin container 1 from the preform 10. The blow molding step S13 will be described in detail later. When the resin container 1 is manufactured in the blow molding step S13, the resin container 1, which is held by the neck mold 151, is transported by the transport means 150 to the removal section 140.

The removal step S14 is a step of removing the resin container 1 transported to the removal section 140 to outside of the manufacturing apparatus 100. The resin container 1 is not held by the neck mold 151 by opening the neck mold 151, and is removed to outside of the manufacturing apparatus 100.

The blow molding step S13 includes a first blow molding step S131 and a second blow molding step S132. The first blow molding section 131 is a step of blow-molding the preform 10 in the first blow molding section 131 to manufacture the intermediate product 20. The second blow molding step S132 is a step of blow-molding the intermediate product 20 in the second blow molding section 132 to manufacture the resin container 1. The first blow mold section 131 and the first blow mold step S131, and the second blow mold section 132 and the second blow mold step S132 will be described.

FIG. 7 illustrates the first blow molding section 131. The first blow molding section 131 includes a first blow mold unit 1310 and a second mold opening/closing mechanism (not illustrated) configured to perform a mold opening/closing operation of the first blow mold unit 1310. The first blow mold unit 1310 includes a first cavity mold 1311, a first core mold 1312, a stretch rod 1313, and a bottom mold 1314. The first cavity mold 1311 is split molds formed so as to define an outer shape of the intermediate product 20 together with the neck mold 151. The first cavity mold 1311 is an example of a first mold. The first core mold 132, which is inserted into the preform neck portion 11, is configured to introduce air into an interior of the preform 10. The stretch rod 1313 is an elongated member. The stretch rod 1313 is configured so as to stretch the preform 10 when the stretch rod 1313 is displaced downward while in contact with the preform bottom portion 13.

In the first blow molding step S131, when the preform 10 is transported to the first blow molding section 131 and accommodated in the first cavity mold 1311, the first core mold 1312 is inserted into the preform neck portion 11, and the stretch rod 1313 is inserted into the preform 10 and displaced downward. The stretch rod 1313 continues to be displaced downward even after contacting an inner surface of the preform bottom portion 13, and thus, the preform 10 is stretched downward by the stretch rod 1313. The air is introduced into the preform 10 from the first core mold 1312, and as a result, the preform 10 is blow-molded and shaped into the shape of the intermediate product 20. Note that before the first blow molding step S131 (before the intermediate product 20 is molded), a preliminary blow molding step of slightly expanding the preform 10 may be performed. The preliminary blow molding step is performed in the temperature adjusting section 120 or the first blow molding section 131.

FIG. 8 illustrates the second blow molding section 132. The second blow molding section 132 includes a second blow mold unit 1320 and a second mold opening/closing mechanism (not illustrated) configured to perform a mold opening/closing operation of the second blow mold unit 1320. The second blow mold unit 1320 includes a second cavity mold 1321, a second core mold 1322, an insert mold 1323, and a bottom mold 1324. The second cavity mold 1321 is split molds formed to define the outer shape of the resin container 1 other than the gripping recessed portion 5 together with the neck mold 151. The second core mold 1322, which is inserted into the intermediate product neck portion 21, is configured to introduce air into the intermediate product 20. The insert mold 1323 is configured to define the shape of the gripping recessed portion 5. In the present embodiment, each split mold of the second cavity mold 1321 includes one insert mold 1323 (a pair of second cavity molds 1321 include two insert molds). The second cavity mold 1321 and the insert mold 1323 are separate bodies. The insert mold 1323 is attached and fixed so as to be fitted into an opening formed in the second cavity mold 1321. The insert mold 1323 is configured to be attachable to and detachable from the second cavity mold 1321. The second cavity mold 1321 and the insert mold 1323 are an example of a second mold. The second cavity mold 1321 is an example of a cavity mold.

In the second blow molding step S132, if the intermediate product 20 is transported to the second blow molding section 132, and accommodated in the second cavity mold 1321, when the second cavity mold 1321 is closed, the insert molds 1323 press the intermediate product body portion 22 from both sides. As a result, the gripping recessed portion 5 is formed in the intermediate product 20. When the second cavity mold 1321 is completely closed, the second core mold 1322 is inserted into the intermediate product neck portion 21, and the air is introduced into the intermediate product 20. As a result, the intermediate product 20 is blow-molded and formed into the shape of the resin container 1.

The gripping recessed portions 5 formed in the second blow molding section 132 are formed sufficiently deeply that the gripping recessed portions 5 approach each other inside the body portion 3 of the resin container 1. Specifically, when D1 denotes a diameter of the stretch rod 1313 illustrated in FIG. 7 and D2 denotes a distance between the inner surfaces of the gripping recessed portions 5 illustrated in FIG. 8, the gripping recessed portions 5 are formed so that D1 > D2 is established. In other words, a gap between recessed portions of the gripping recessed portions 5 molded by the second blow molding section 132 is smaller than the diameter of the stretch rod 1313. The diameter of the stretch rod 1313 is, for example, equal to or greater than 6 mm and equal to or smaller than 10 mm. The distances D2 between the inner surfaces of the gripping recessed portions 5 are, for example, from 2 mm to 5 mm.

In the second blow molding section 132, the insert mold 1323 is attached to the second cavity mold 1321 so that a gap S is formed between the insert mold 1323 and the second cavity mold 1321. The gap S functions as a flow path for discharging air between the intermediate product 20 and the second cavity mold 1321 when the intermediate product 20 is blow-molded.

According to the present embodiment, in the second blow molding step S132, the second blow molding section 132 can form the gripping recessed portion 5, which is a sufficiently deep recessed portion, in the body portion 3 of the resin container 1 by the second cavity mold 1321 and the insert mold 1323 which are second molds.

According to the present embodiment, in the second blow molding section 132, the preform 10 is stretched in the first blow molding section 131 while the gripping recessed portion 5 narrower than the diameter of the stretch rod 1313 is formed in the resin container 1. Stretching the preform 10 is effective in forming the resin container 1 without axial misalignment and improving the strength of the resin container 1. On the other hand, the formation of the gripping recessed portion 5 to be narrower than the diameter of the stretch rod 1313 enables improvement of ease of gripping of the resin container 1. The gap between the gripping recessed portions 5 is narrower than the diameter of the stretch rod 1313, and thus, conventionally, it is not possible to simultaneously stretch the preform 10 and form the gripping recessed portion 5. However, in the present embodiment, the blow molding section 130 (blow forming step S13) includes at least the first blow molding section 131 (first blow forming step S131) and the second blow molding section 132 (second blow forming step S132), and the blow forming is performed at least twice in manufacturing the resin container 1 from the preforms 10. In the first blow molding section 131 (first blow molding step S131), the intermediate product 20 is molded from the preform 10 into a shape close to the shape of the resin container 1, and is stretched in advance before the gripping recessed portions 5 are formed, and therefore, the stretching of the preform 10 and the formation of the gripping recessed portions 5 can be performed simultaneously. As a result, it is possible to form the gripping recessed portion 5 having a depth that allows for sufficiently easy grip while improving the appearance and strength of the resin container 1.

According to the present embodiment, as illustrated in FIG. 2, when viewed transparently from the outer peripheral surface where the gripping recessed portion 5 is formed, the gripping recessed portion is formed so as to overlap the central axis Ax of the resin container 1. Therefore, when the gripping recessed portion 5 is gripped, a position close to the center of gravity of the resin container 1 is gripped, and thus, the resin container 1 is easily gripped.

According to the present embodiment, the second cavity mold 1321 and the insert mold 1323 are separate bodies and the insert mold 1323 is attachable to and detachable from the second cavity mold 1321, and thus, when the insert mold 1323 is simply replaced, the shape of the gripping recessed portion 5 can be changed. The gripping recessed portion 5 having a shape different from that of the present embodiment will be described later.

According to the present embodiment, the gap S is formed between the insert mold 1323 and the second cavity mold 1321, and thus, during blow molding in the second blow molding section 132, the air between the intermediate product 20 and the second cavity mold 1321 is discharged via the gap S. The gap S through which the air between the intermediate product 20 and the second cavity mold 1321 is discharged is formed near the gripping recessed portion 5, and thus, the shape of the gripping recessed portion 5, particularly, the shape of the edge portion of the recessed portion 5b appears more clearly in the resin container 1.

Note that it is desirable that the temperature of the first cavity mold 1311 in the first blow molding section 131 is higher than the temperature of the second cavity mold 1321 in the second blow molding section 132. The temperature of the first cavity mold 1311 may be from 90°C to 125°C. The temperature of the second cavity mold 1321 may be from 5°C to around room temperature. Accordingly, the intermediate product 20 manufactured in the first blow molding section 131 is adjusted to a temperature at which the intermediate product 20 is easily shaped in the second blow molding section 132.

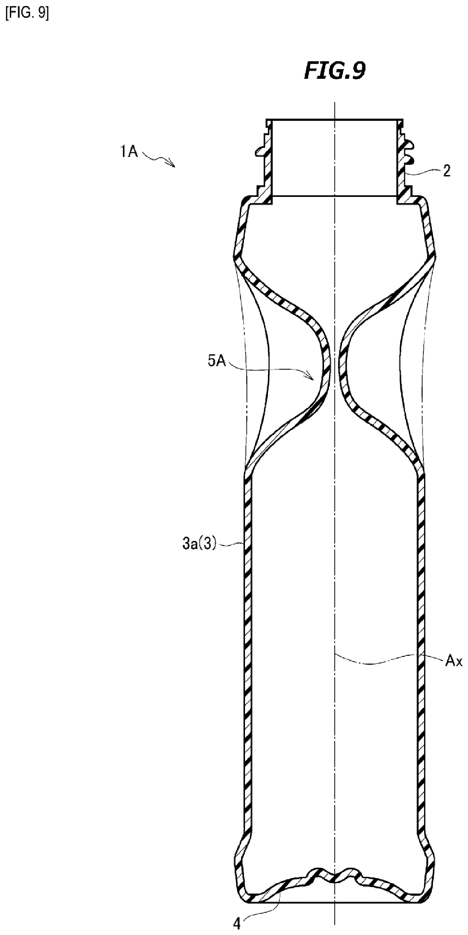

Next, a resin container 1A according to a modification will be described. FIG. 9 illustrates the resin container 1A according to the modification. As illustrated in FIG. 9, the resin container 1A according to the modification is different from the resin container 1 according to the present embodiment in the shape of a gripping recessed portion 5A. The gripping recessed portion 5A is formed to have a spherical surface projecting toward the central shaft Ax.

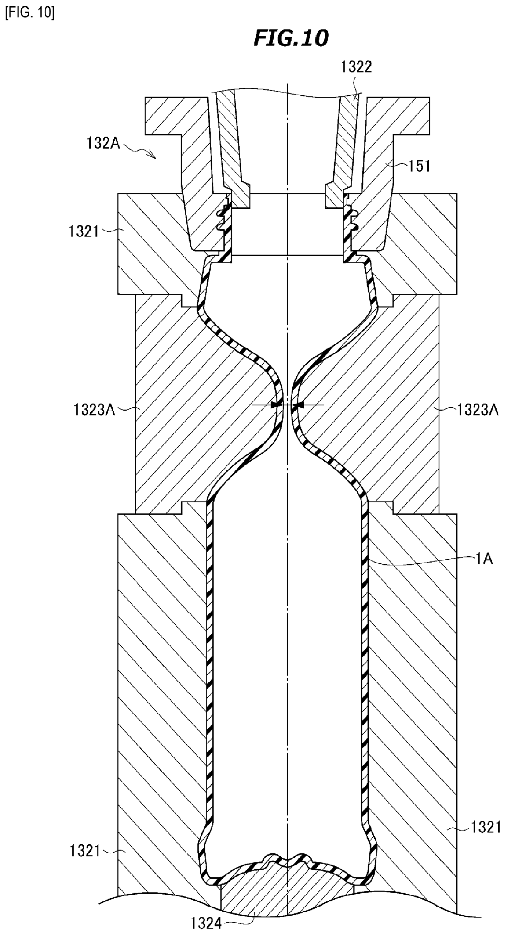

Next, a manufacturing apparatus for the resin container 1A according to the modification will be described. FIG. 10 illustrates a second blow molding section 132A for manufacturing the resin container 1A according to the modification. The second blow molding section 132A includes the second cavity mold 1321, the second core mold 1322, and an insert mold 1323A as in the present embodiment, but the shape of the insert mold 1323A is different from that in the present embodiment. The shape of the gripping recessed portion 5A can be changed by differing the shape of the insert mold 1323A. As described above, the insert mold 1323 is configured to be attachable to and detachable from the second cavity mold 1321, and thus, it is easy to change the shape of the gripping recessed portion 5.

Thus, the present disclosure is described based on the embodiments. The present embodiment is an example of the present disclosure, is not limited to the above-described embodiment, and may be appropriately modified, improved, and the like. In addition, the material, shape, dimension, numerical value, form, number, arrangement location, and the like of each component in the above-described embodiments can be appropriately determined and are not limited as long as the present disclosure can be achieved.

The insert mold 1323 may form the gripping recessed portion 5 by moving relative to the second cavity mold 1321, or the insert mold 1323 may be configured to be fixed to the second cavity mold 1321 and form the gripping recessed portion 5 by clamping the second cavity mold 1321.

The apparatus for manufacturing the resin container 1 is not limited to the hot parison type (one step type) manufacturing apparatus 100. The resin container may be manufactured by a cold parison type (two step type) manufacturing apparatus including two blow molding sections. For example, in Japanese Patent No. 5503748, a manufacturing apparatus may include a supply mechanism configured to load a preform at room temperature into the apparatus, a heating mechanism configured to heat the supplied preform to a temperature suitable for blowing, a primary blow molding section configured to blow-mold the heated preform into a shape of the intermediate product 20 of the present application, and a secondary blow molding section configured to blow-mold the intermediate product 20 into a shape of the resin container 1 of the present application. In such a case, a primary blow mold of the primary blow molding section may have the structure similar to that of the first blow mold unit 1310 in the present embodiment. A secondary blow mold of the secondary blow molding section may have the structure similar to that of the second blow mold unit 1320 in the present embodiment.

The present application claims priority based on Japanese Patent Application No. 2023-178365 filed on October 16, 2023, and incorporates all the contents described in the application.

### REFERENCE SIGNS LIST

1, 1A Resin container
2 Neck portion
3 Body portion
4 Bottom portion
5 Gripping recessed portion
5a Flat portion
5A Gripping recessed portion
5b Edge portion of recessed portion
10 Preform
11 Preform neck portion
12 Preform body portion
13 Preform bottom portion
20 Intermediate product
21 Intermediate product neck portion
22 Intermediate product body portion
23 Intermediate product bottom portion
100 Manufacturing apparatus
110 Injection molding section
111 Injection device
120 Temperature adjusting section
130 Blow molding section
131 First blow molding section
132, 132A Second blow molding section
140 Removal section
150 Transport means
151 Neck mold
1310 First blow mold unit
1311 First cavity mold
1312 First core mold
1313 Stretch rod
1314, 1324 Bottom mold
1320 Second blow mold unit
1321 Second cavity mold
1322 Second core mold
1323, 1323A Insert mold
Ax Central axis
S Gap

## Claims

1. A blow molding apparatus comprising at least two blow molding sections, wherein
the blow molding section comprises:
a first blow molding section configured to blow-mold the preform to manufacture an intermediate product; and
a second blow molding section configured to blow-mold the intermediate product to manufacture a container,
the second blow molding section is configured to be capable of molding a gripping recessed portion in a body portion of the container, and
recessed portions of the gripping recessed portions are formed sufficiently deeply to be close to each other inside the body portion of the container.

2. The blow molding apparatus according to claim 1, wherein the first blow molding section includes a stretch rod, and
a gap between the recessed portions of the gripping recessed portions molded by the second blow molding section is smaller than a diameter of the stretch rod.

3. The blow molding apparatus according to claim 1 or 2, wherein when viewed transparently from an outer peripheral surface formed with the gripping recessed portion in the container, the container is formed such that at least a part of the gripping recessed portion overlaps a central axis of the container.

4. The blow molding apparatus according to any one of claims 1 to 3, wherein the second blow molding section includes a cavity mold defining an outer diameter shape of the container other than the gripping recessed portion and an insert mold defining a shape of the gripping recessed portion,
the cavity mold and the insert mold are separate bodies, and
the insert mold is configured to be attachable to and detachable from the cavity mold.

5. The blow molding apparatus according to claim 4, wherein the insert mold is attached to the cavity mold so that a gap is formed between the insert mold and the cavity mold.

6. A blow molding method comprising at least two blow molding steps, wherein
the blow molding step comprises:
a first blow molding step of blow-molding the preform to manufacture an intermediate product; and
a second blow molding step of blow-molding the intermediate product to manufacture a container,
the second blow molding step includes molding a gripping recessed portion in a body portion of the container, and recessed portions of the gripping recessed portions are formed sufficiently deeply to be close to each other inside the body portion of the container.

7. A mold unit comprising at least two blow molding sections and being used in a blow molding apparatus, wherein
the mold unit comprises:
a first mold for a first blow molding section configured to blow-mold the preform to manufacture an intermediate product; and
a second mold for a second blow molding section configured to blow-mold the intermediate product to manufacture a container,
the second mold is configured to be capable of molding a gripping recessed portion in a body portion of the container, and recessed portions of the gripping recessed portions are formed sufficiently deeply to be close to each other inside the body portion of the container.
